Europäisches Patentamt

European Patent Office

Office européen des brevets

(11) Numéro de publication: **0 181 274**
**A1**

## (12) DEMANDE DE BREVET EUROPEEN

(21) Numéro de dépôt: 85420194.4

(22) Date de dépôt: 24.10.85

(51) Int. Cl.⁴: **B 65 G 47/24**

(30) Priorité: 30.10.84 FR 8416776

(43) Date de publication de la demande:
14.05.86 Bulletin 86/20

(84) Etats contractants désignés:
CH DE FR LI

(71) Demandeur: Perrillat, Edouard
Avenue de la Libération
F-74460 Marnaz(FR)

(72) Inventeur: Perrillat, Edouard
Avenue de la Libération
F-74460 Marnaz(FR)

(54) **Mécanisme spécial servant à placer des pièces de toutes formes dans une position bien déterminée, en vue de leur faire subir un usinage.**

(57) Il est constitué par un arbre (20) tournant sur deux coussinets (3) et (4), muni d'un pignon denté et crémaillère et d'un embrayage (7) accouplé par le doigt (21). A l'extrémité de l'arbre est fixé le montage de rotation (5) contenant la pièce à positionner (1 ou 2), conduite par le canal (19). Quand le montage est en position horizontale, la came (11) fait avancer le palpeur (13) et le doigt (14).

Dans un premier cas, le palpeur (13) passe : figure 15, le doigt (14) débraye, le montage (5) reste immobile. Dans le deuxième cas, le palpeur (13) ne passe pas : figure 16, le doigt (14) ne débraye pas, grâce à la came (6), l montage change de position.

FIG. 14

EP 0 181 274 A1

Cette invention présente un mécanisme spécial destiné à positionner des pièces de toutes formes, les placer dans une position bien déterminée, alors que celles-ci auront été fournies dans une position libre par un vibreur d'approvisionnement.

Auparavant, le vibreur devait fournir la pièce dans une position donnée grâce à un système d'orientation incorporé au vibreur, mais ce système n'ayant pas un fonctionnement certain, d'où source de difficultés. Ce mécanisme permettra de positionner la pièce d'une façon sûre, simple et rationnelle.

Nous présentons ici ce mécanisme fonctionnant avec une pièce de la forme d'une vis, mais il est bien précisé qu'il pourra positionner toute pièce, quelle que soit sa forme, sans rencontrer d'impossibilité, car il existe des mécanismes de ce genre, mais dont le fonctionnement n'est possible que pour une pièce d'une forme bien déterminée.

Nous présentons ce mécanisme sous deux réalisations différentes. Suivant un premier mode de réalisation, il est représente figure I. Il fonctionne grâce à des cames fixées sur un arbre à cames. Pour faciliter la compréhension, cet arbre n'est pas représenté sur notre dessin, nous avons dessiné la came face à l'élément mécanique où elle fournit le mouvement en temps opportun.

Le mécanisme est constitué par un arbre (20) tournant sur deux coussinets (3) et (4), à l'extrémité de celui-ci est fixé le montage de rotation (5), en abrégé (M de R, qui contient la pièce à positionner. Cet arbre peut tourner grâce à la came (6) par l'intermédiaire d'une crémaillère et pignons dentés. Nous remarquerons l'embrayage(7) commandé par la came (8) et maintenu accouplé grâce au doigt de retenue (2I).

Cet ensemble permet de placer le M de R (5) dans les positions suivantes : I° position verticale, 2° position horizontale, 3° position horizontale inverse, ainsi que leurs retours respectifs : retour à la Ière position horizontale, retour à la position verticale. Il est évident que lorsque le mécanisme (7) est embrayé et que la came (6) donne un mouvement, le M de R (5) change de position : rotation réelle. Lorsque le mécanisme (7) est débrayé et que la came (6) donne un mouvement, le M de R (5) reste immobile : rotation à vide.

Face au M de R (5), nous avons le porte-palpeur(9) coulissant dans le support (IO). Il sera poussé en avant par la came (II) et nous remarquons un ressort compressible (I2) placé en intermédiaire entre la came et le porte-palpeur. Nous remarquons le palpeur (I3) et l'orifice dans le M de R (5) qui permettra son passage.

Signalons le fait que le porte-palpeur (9) avancera lorsque le M de R (5) sera en position horizontale, alors qu'il est représenté ici en position verticale. Sur la partie droite du porte-palpeur, nous voyons un doigt (I4), qui éventuellement viendra pousser le doigt de retenue (2I) pour provoquer le débrayage du mécanisme.

A droite du M de R (5), nous voyons le poussoir (I5) mû par la came (I6) qui évacuera la pièce du M de R lorsque celui-ci sera en position horizontale en la poussant sur la voie de cheminement (I7), en direction du poste de travail.

La pièce (I8) est représentée dans la position telle que devra la placer le mécanisme de positionnement. Surmontant le M de R (5), se trouve le canal d'approvisionnement (I9) qui, recueillant la pièce donnée par le vibreur, la conduit dans le M de R (5). Le vibreur fait tomber une seule pièce à la fois dans le canal. Si nous avons dessiné deux pièces en cours de chute, c'est pour montrer que la pièce se trouvera placée dans la position qu'aura bien voulu lui attribuer le hasard et que ces positions sont au nombre de deux : pièce (I) et pièce (2). Le mécanisme aura donc deux fonctionnements différents, suivant qu'il sera approvisionné comme pièce (I) ou comme pièce (2).

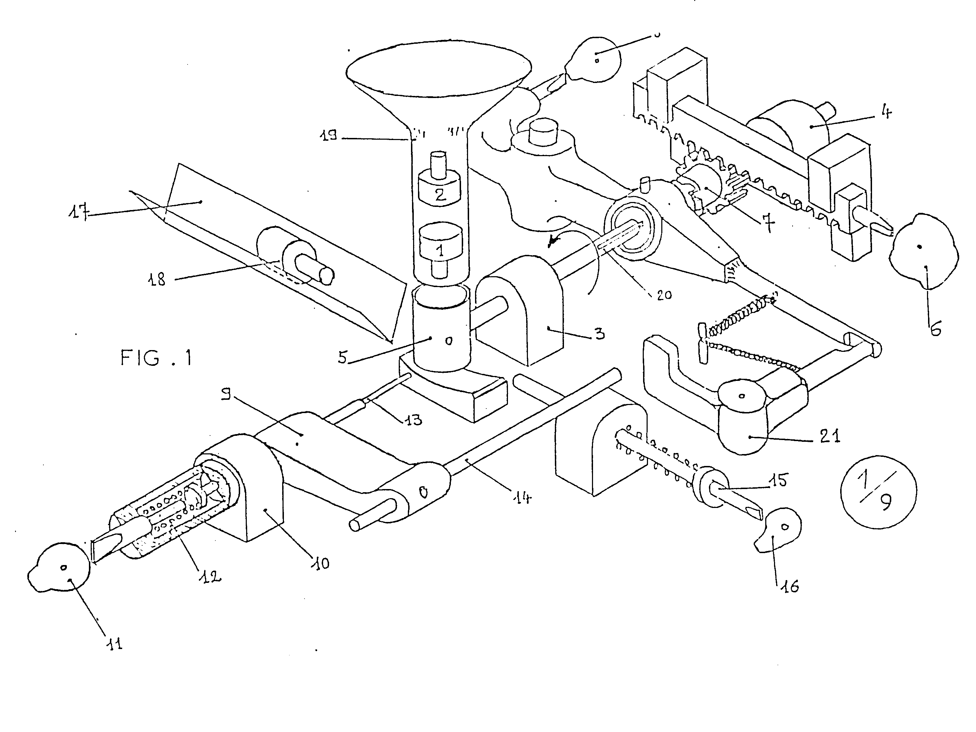

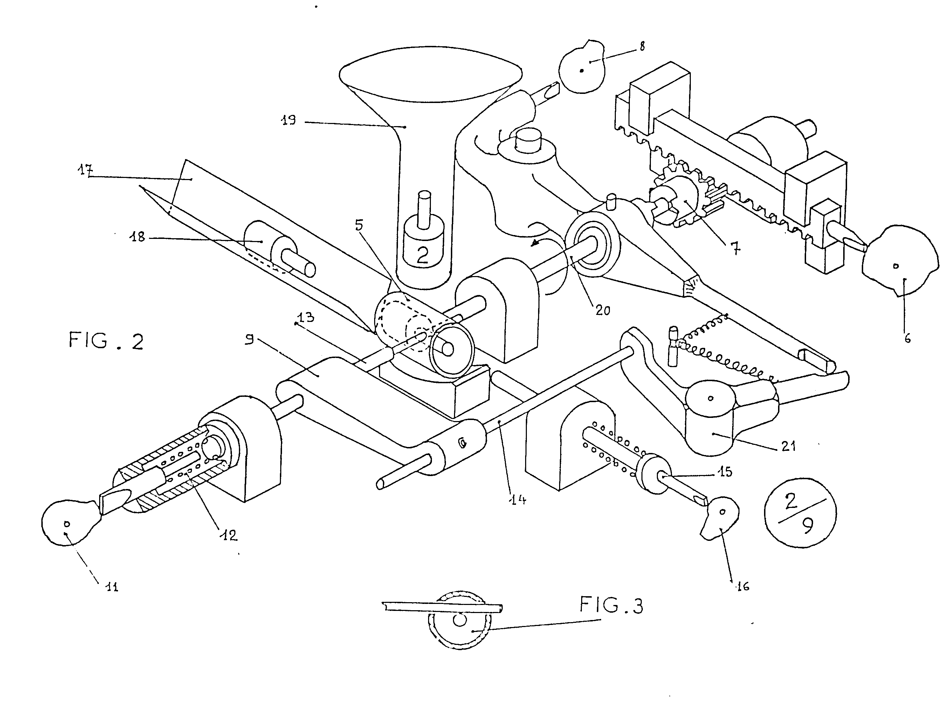

Fonctionnement Ière éventualité : fig.2 : la pièce (I) est tombée dans le M de R en position verticale, poussé par la came (6), le M de R (5) est venu en position horizontale, poussé par la came (II), le palpeur a avancé, le passage est libre : fig.3, donc l'avance est longue. Le doigt (I4) a provoqué le débrayage en appuyant sur le levier (2I), le palpeur se retirera. La came (6) fournira le mouvement pour la rotation du M de R (5) en position horizontale inverse, mais le mécanisme est débrayé, celui-ci restera immobile : rotation à vide. Le pousoir (I5) actionné par la came (I6) fera avancer la pièce qui se trouve placée en position désirée sur le rail (I7), puis il se retirera, puis viendra le retour de rotation à la Ière position horizontale : retour à vide, puis l'embrayage, puis le retour à la position verticale. Cycle terminé.

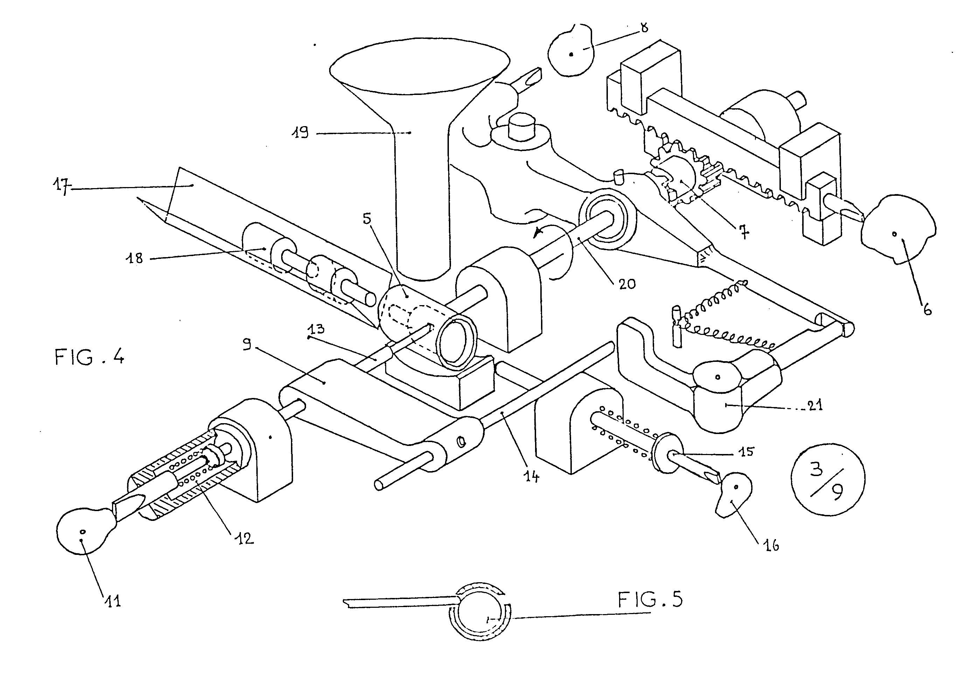

Fonctionnement 2ème éventualité : fig.4 : la pièce (2) est tombée dans le M de R en position verticale, puis le M de R (5) est venu en position horizontale, puis le palpeur a avancé, mais le passage est fermé : fig.5, donc l'avance est courte. Le doigt (I4) ne vient pas pousser le levier (2I), le ressort se comprime pour absorber cette différence de poussée, le mécanisme reste embrayé. Le palpeur se retirera, puis le M de R (5) viendra en position horizontale inverse : rotation réelle, le poussoir (I5) fera avancer la pièce qui se trouvera placée en position désirée sur le rail (I7), puis il se retirera, viendra ensuite le retour à la Ière position horizontale : retour réelle, puis le retour à la position verticale. Cycle terminé.

En résumé du fonctionnement des deux éventualités du mécanisme, nous pouvons dire que la pièce, une fois mise en position horizontale s'est trouvée placée suivant l'effet du hasard, soit dans le Ier cas: en bonne position, soit dans le 2ème cas : en mauvaise position.

A ce moment, le mécanisme peut produire un changement de position supplémentaire, dans le Ier cas, un passage du palpeur ouvert a supprimé ce changement de position inutile. Dans le 2ème cas, un passage du palpeur fermé a conservé ce changement de position pour remettre la pièce en position désirée.

Lorsqu'on observe les fig. 2 et 4 relatives à l'avance du palpeur, on remarque que la pièce a été palpée sur sa droite, on comprend que c'est pour cette raison que la pièce a été positionnée comme pièce (I8) et si l'on imagine la pièce palpée sur sa gauche, on devine que celle-ci aurait été placée dans une position exactement contraire de la pièce (I8).

Donc, lorsqu'on aura réglé le mécanisme, on procèdera de la façon suivante : on placera cette pièce dans la position désirée, puis on placera le palpeur de telle manière que son passage soit ouvert, puis on imaginera cette pièce dans la position contraire, à ce moment, le passage du palpeur devra être fermé. En suivant cette règle, on pourra obtenir du mécanisme qu'il place la pièce en position désirée, quelle que soit la forme de celle-ci. Le mécanisme de positionnement, peut être utilisé dans toute automatisation de machine, là où il faudra diriger une pièce dans une position bien déterminée vers le poste de travail, soit d'un tour, d'une fraiseuse, d'une perceuse, d'une rectifieuse, etc..., dans le but de lui faire subir un usinage.

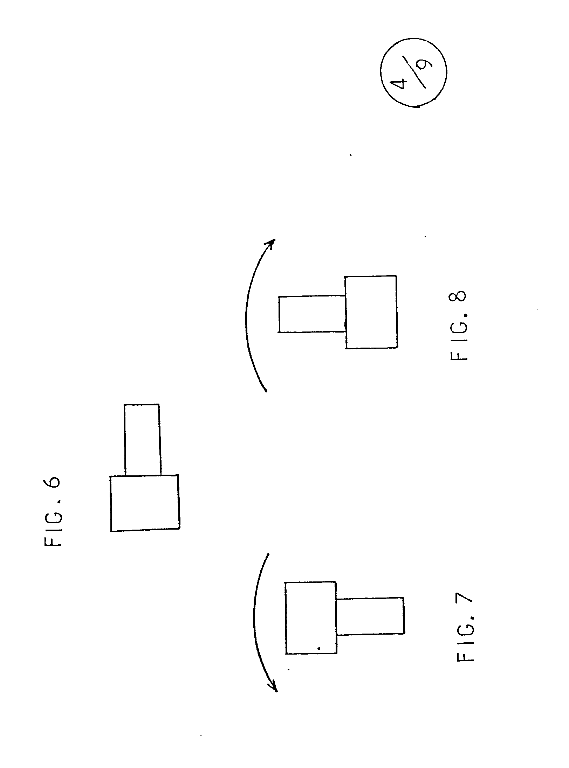

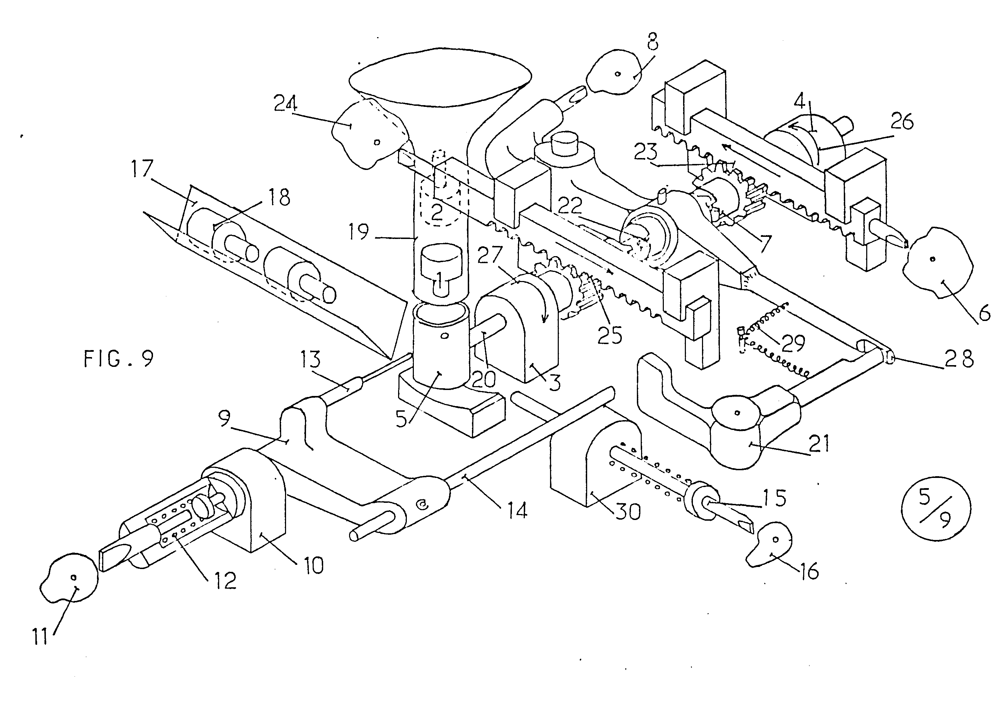

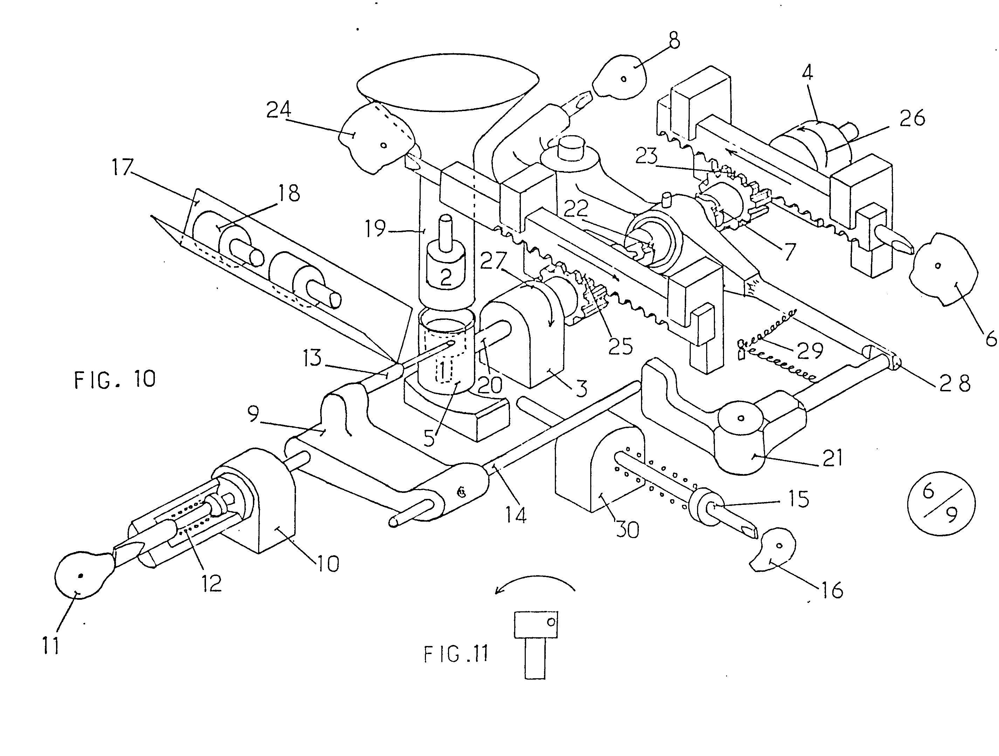

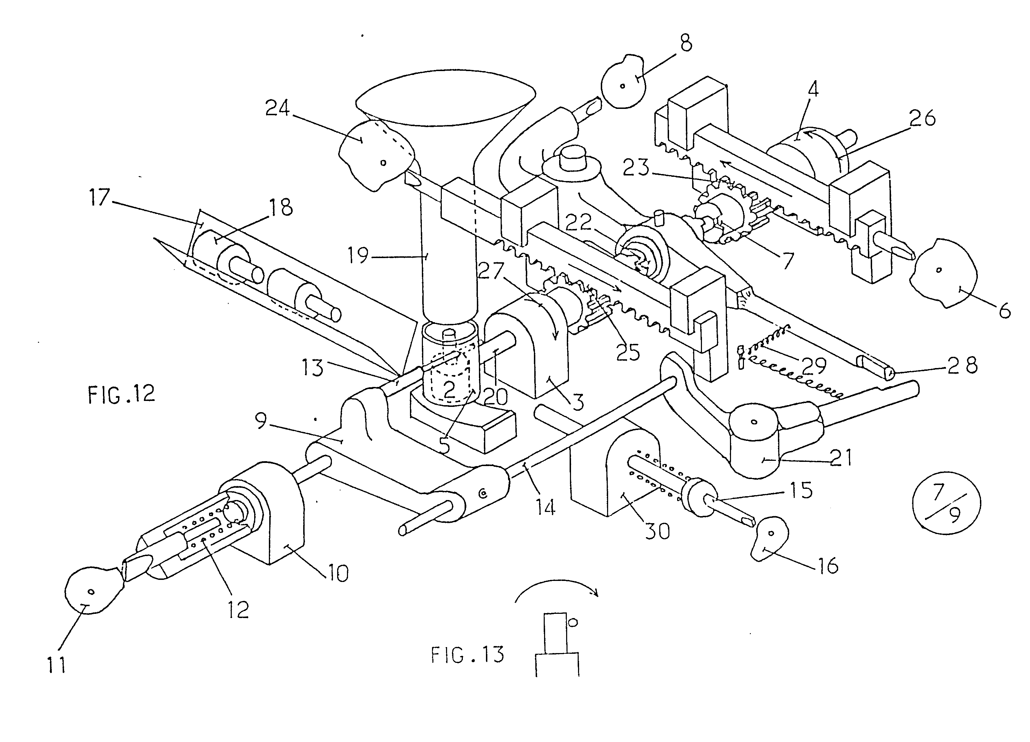

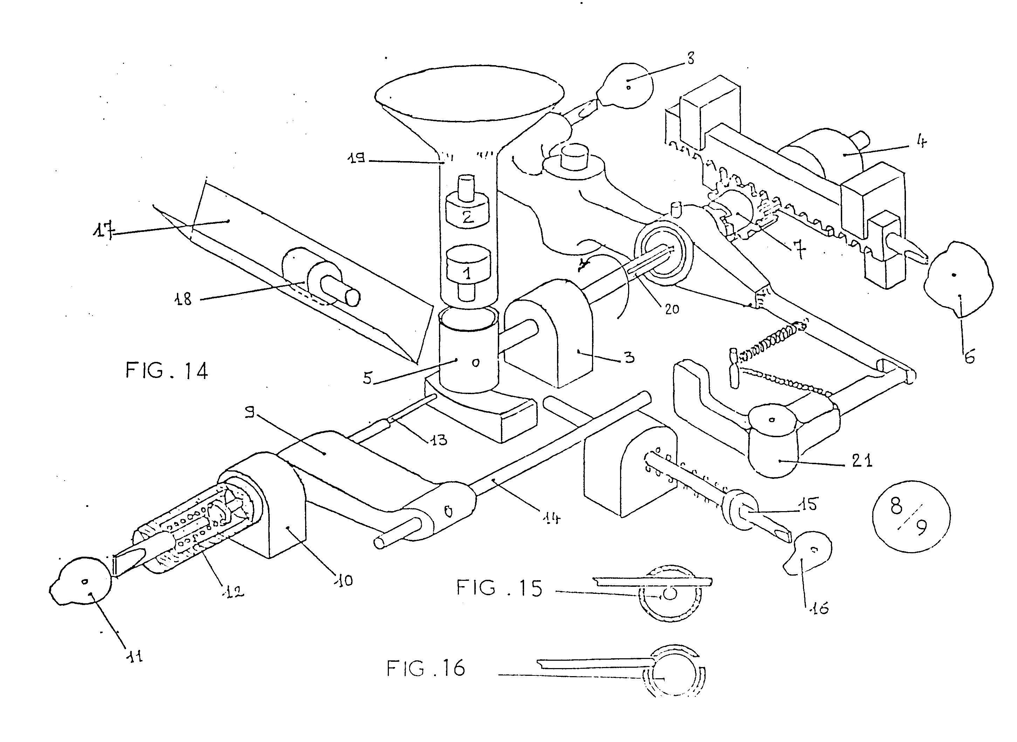

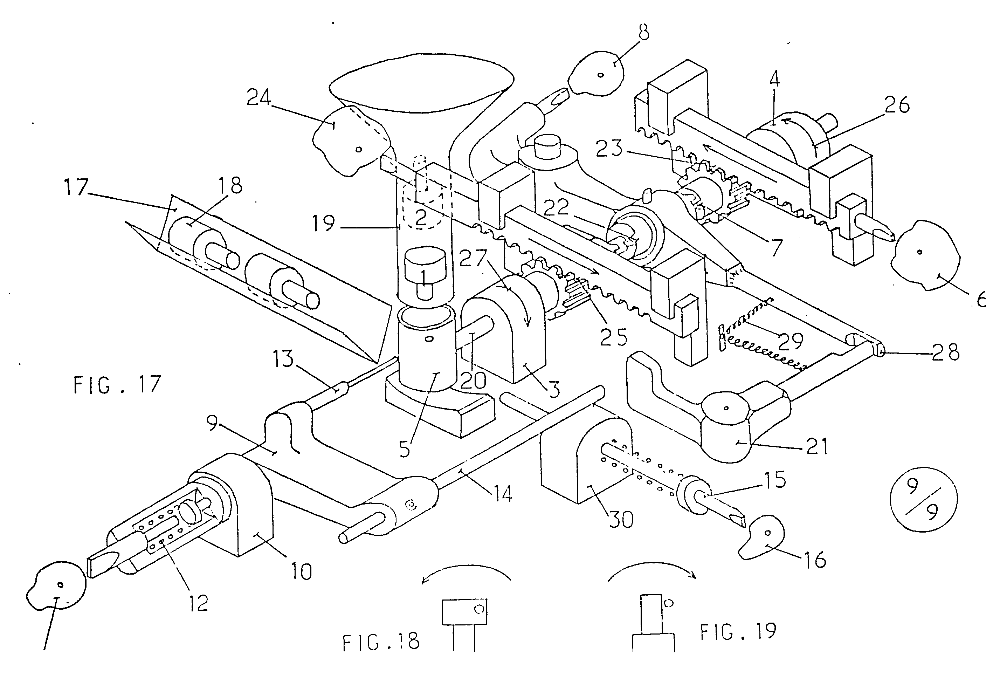

Suivant un deuxième mode de réalisation, nous présentons un mécanisme de positionnement dont le fonctionnement nous est fourni par le raisonnement suivant: lorsque nous observons les fig. 7 et8, qui sont les deux éventualités d'approvisionnement d'une pièce en position verticale et que celles-ci doivent être placées dans la position horizontale conforme à la fig.6, nous comprenons que : pour la pièce fig. 7, il faudrait qu'une rotation de 90° soit effectuée dans le sens de la flèche rotation à gauche, et que, pour la pièce fig.8, une rotation de 90° soit effectuée dans le sens de la flèche rotation à droite, pour que dans ces deux cas, ces deux pièces se trouvent placées en position conforme à la figure 6.

Pour parvenir à ce résultat, nous disposons du mécanisme de positionnement fig.9. Ce mécanisme est constitué par un arbre (20) tournant sur deux coussinets (3) et (4), à l'extrémité avant est fixé le montage (5) qui contiendra la pièce à positionner et appelé montage de rotation, en abrégé : M de R. Cet arbre (20) est muni d'un premier ensemble mécanique composé d'un embrayage (7), d'un pignon denté à crémaillère (23) mûpar la came (6), cet embrayage est maintenu accouplé grâce au doigt de retenue (28) accroché sur le levier (2I), cet ensemble permet, quand le M de R (5) est en position verticale, de le placer en position horizontale en le faisant tourner dans le sens de la flèche (26) rotation à gauche, puis de revenir à la position initiale.

Cet arbre (20) est également muni d'un deuxième ensemble composé d'un embrayage (22) et d'un pignon denté à crémaillère (25) mû par la came (24) qui permet, quand le M de R (5) est en position verticale, de le placer en position horizontale en le faisant tourner dans le sens de la flèche (27) rotation à droite, puis de revenir à la position initiale à condition que son embrayage soit accouplé, alors qu' il est représenté ici débrayé.

Si nous décrochons le doigt de retenue (28), la traction du....

ressort (29) provoque le débrayage (7) et l'embrayage (22) comme le montre la fig.I2, le réembrayage (7) est fourni par la came (8).

Lorsque nous avons un embrayage accouplé, l'autre est obligatoirement débrayé et vice-versa..

Le fonctionnement est le suivant : les cames (6) et (24) fournissent toutes les deux leur mouvement, mais le mouvement reçu par le M de M (5) est celui donné par la came dont l'embrayage est accouplé, l'autre étant débrayé, le mouvement s'effectue dans le vide. Exemple; sur la fig.9, le mouvement utilisé est celui donné par la came (6) rotation à gauche, et le mouvement à vide est celui donné par la came (24) rotation à droite.

Dans l'explication qui va suivre, nous passerons sous silence la rotation à vide et nous ne mentionnerons que la rotation utilisée.

Face au M de R (5), nous avons le porte-palpeur (9) coulissant dans le support (I0). Il sera poussé en avant par la came (II) et nous remarquons le ressort compressible (I2) placé en intermédiaire entre la came et le porte-palpeur (9). Nous voyons le palpeur (I3) et l'orifice dans le M de R (5) qui permettra son passage.

Le porte-palpeur (9) avance quand le M de R (5) est en position verticale. Sur la partie droite du porte-palpeur (9), nous voyons le doigt (I4) qui éventuellement viendra pousser le levier (2I) et faire décrocher le doigt de retenue (28), provoquant ainsi le débrayage (7) et l'embrayage (22).

A droite du M de 5 (5), nous remarquons le poussoir (I5) mû par la came (I6) qui évacuera la pièce du M de R lorsque celui-ci sera placé en position horizontale en la poussant sur la voie de cheminement (I7) en direction du poste de travail.

La pièce (I8) est représentée dans la position telle que devra la placer le mécanisme de positionnement. Surmontant le M de R (5), se trouve le canal d'approvisionnement (I9) qui, recueillant la pièce donnée par le vibreur d'approvisionnement, la conduit dans le M de R (5). Le vibreur ne fait tomber qu'une seule pièce à la fois dans le canal(I9), si nous avons dessiné deux pièces en cours de chute, c'est pour montrer que la pièce se trouvera placée dans la position qu'aura bien voulu lui attribuer le hasard et que ces positions sont au.....

nombre de deux : pièce (I) ou pièce (2).

Le mécanisme aura donc deux fonctionnements différents, sui - vant qu'il sera approvisionné comme pièce (I) ou comme pièce (2).

Fonctionnement Ière éventualité : fig.IO : la pièce (I) tombe dans le M de R (5), poussé par la came (II), le porte-palpeur (9) avance, le passage de celui-ci est fermé : fig.II, l'avance est courte, le ressort (I2) est comprimé, le doigt (I4) ne vient pas pousser le levier (2I), l'embrayage (7) reste accouplé, le palpeur (I3) se retire, le M de R (5) sous la poussée de la came (6) passe en position horizontale en tournant dans le sens de la flèche (26) rotation utilisée à gauche. Poussé par la came (I6), le poussoir (I5) pousse la pièce qui se trouve placée en position conforme pièce (I8) sur le rail (I7), le poussoir se retire et le M de R (5) revient en position verticale. Cycle terminé.

Fonctionnement 2ème éventualité : fig. I2: la pièce (2) tombe dans le M de R (5), sous la poussée de la came (II), le palpeur (I3) avance, le passage de celui-ci est libre : fig.8, l'avance est lon- gue, le doigt (I4) vient pousser le levier (2I) décrochant ainsi le doigt de retenue (28), le ressort (29) provoque le débrayage (7) et l'embrayage (22), le palpeur se retire, sous la poussée de la came (24), le M de R (5) passe en position horizontale en tournant dans le sens de la flèche (27) rotation utilisée à droite. Sous la poussée de la came (I6), le poussoir (I5) fait avancer la pièce qui se trouve placée en bonne position sur le rail (I7), puis il se retire. Le M de R (5) revient à la position verticale. Cycle terminé.

En résumé du fonctionnement de ce mécanisme, nous constatons que les pièces (I) et (2) données en position verticale ont été placées directement en position horizontale exigée.

Pour parvenir à ce résultat, l'avance du palpeur a consisté à sélectionner entre les deux sens de rotation proposés : à gauche ou à droite, la rotation adéquate qui a placé la pièce dans la position demandée.

Lorsqu'on observe les figures II et I3 relatives à l'avance du palpeur, nous remarquons que la pièce a été palpée dans sa partie supérieure, on comprend que c'est pour cette raison que la pièce a été..

positionnée conformément à la pièce (I8).

Si l'on imagine la pièce palpée dans sa partie inférieure, on devine qu'elle aurait été placée dans une position exactement contraire à la pièce (I8).

Ce mécanisme de positionnement de pièce peut être utilisé dans toute automatisation de machine, là où il faudra diriger une pièce dans une position bien déterminée vers le poste de travail, soit d'un tour, d'une fraiseuse, d'une perceuse, d'une rectifieuse, etc..., dans le but de lui faire subir un usinage.

REVENDICATIONS

I) Mécanisme de positionnement de pièces de toutes formes, selon un premier mode de réalisation pouvant les placer dans une position bien déterminée, caractérisé en ce qu'il comporte un arbre (20) tournant sur deux coussinets (3) et (4), recevant à son extrémité le montage de rotation (5) contenant la pièce à positionner ( I ou 2), ledit arbre (20) pouvant tourner grâce à une came (6) par l'intermédiaire d'une crémaillère et pignons dentés et de l'embrayage (7) commandé par la came (8) et maintenu accouplé grâce au doigt de retenue (2I).

2) Mécanisme de positionnement de pièces de toutes formes, selon un deuxième mode de réalisation pouvant les placer dans une position bien déterminée, caractérisé en ce qu'il comporte un arbre (20) tournant sur deux coussinets (3) et (4), recevant à son extrémité le montage de rotation (5) contenant la pièce à positionner (I ou 2), ledit arbre (20) pouvant exécuter une rotation de 90° dans le sens flèche (26) à gauche, grâce à une came (6) par l'intermédiaire d'une crémaillère et pignons dentés (23) et de l'embrayage (7) commandé par la came (8) et maintenu accouplé grâce au doigt de retenue (2I). Ledit arbre (20) pouvant aussi exécuter une rotation de 90° dans le sens de la flèche (27) à droite, grâce à une came (24) par l'intermédiaire d'une crémaillère et pignons dentés (25) et de l'embrayage (22) maintenu accouplé par le ressort (29).

3) Mécanisme selon les revendications I et 2 caractérisé en ce qu'il comporte pour les deux versions, un porte-palpeur (9) coulissant dans un support (IO) poussé par la came (II) par l'intermédiaire d'un ressort (I2) et portant un palpeur (I3) pénétrant dans le montage de rotation (5) pour palper la pièce (I ou 2) et reconnaître sa position.

4) Mécanisme selon les revendication I et 3 caractérisé en ce qu'il comporte, pour la première version, un porte-palpeur (9) muni d' un doigt (I4) poussant le doigt de retenue (2I) pour provoquer le débrayage du mouvement de rotation.

5) Mécanisme selon les revendications 2 et 4 caractérisé en ce qu'il comporte, pour la deuxième version, un porte-palpeur(9) muni d'un doigt (I4) poussant le doigt de retenue (2I) pour provoquer le...

...débrayage du mouvement gauche (7) et l'embrayage du mouvement droit (22).

6) Mécanisme selon l'ensemble des revendications précédentes caractérisé en ce qu'il comporte pour les deux versions, un poussoir (I5) mû par la came (I6) évacuant dans sa position horizontale la pièce (I8), en la poussant sur la voie de cheminement (I7) en direction du poste de travail.

7) Mécanisme slon l'ensemble des revendications précédentes caractérisé, pour les deux versions, en ce que le montage de rotation(5) est surmonté d'un canal d'approvisionnement (I9) conduisant les pièces (I ou 2).

FIG. 1

0181274

FIG. 2

FIG. 3

FIG. 4

17

18

19

5

13

9

20

8

7

6

14

21

15

12

11

16

FIG. 5

FIG. 6

FIG. 7

FIG. 8

0181274

FIG. 9

5/9

FIG. 10

FIG. 11

0181274

FIG.12

FIG.13

0181274

FIG.14

FIG.15

FIG.16

FIG . 17

FIG . 18

FIG . 19

# RAPPORT DE RECHERCHE EUROPEENNE

**0181274**

Office européen des brevets

Numero de la demande

EP 85 42 0194

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Ci 4) |
|---|---|---|---|
| A | GB-A-1 236 932 (PLESSEY)<br>* En entier *<br>--- | 1,7 | B 65 G 47/24 |
| A | GB-A- 797 331 (TRIGGS)<br><br>* Page 5, revendications 1,5 *<br><br>----- | 1,3,4, 7 | |

DOMAINES TECHNIQUES RECHERCHES (Int Ci 4)

B 65 G

Le présent rapport de recherche a été établi pour toutes les revendications

| Lieu de la recherche | Date d'achèvement de la recherche | Examinateur |
|---|---|---|
| LA HAYE | 23-01-1986 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82